# EUROPÄISCHE PATENTSCHRIFT

(11) **EP 0 907 785 B1**
(45) Veröffentlichungstag und Bekanntmachung des Hinweises auf die Patenterteilung: **06.02.2002**
(21) Anmeldenummer: 97929229.9
(22) Anmeldetag: 20.06.1997
(51) Int. Cl.: D06M 15/11

(54) **FLÜSSIGES WÄSCHESTÄRKE-KONZENTRAT**
LIQUID LAUNDRY STARCH CONCENTRATE
CONCENTRE D'AMIDON DE LESSIVE LIQUIDE

(30) Priorität: 28.06.1996 DE 19625828
(43) Veröffentlichungstag der Anmeldung: 14.04.1999
(73) Patentinhaber: HENKEL-ECOLAB GmbH & CO. OHG, 40589 Düsseldorf (DE)
(72) Erfinder: WILSBERG, Heinz-Manfred, D-40589 Düsseldorf (DE)
(74) Vertreter: Hase, Christian, Dr.
(86) Internationale Anmeldenummer: EP9703221
(87) Internationale Veröffentlichungsnummer: WO9800599

(56) Entgegenhaltungen:
- WO-A-86/05509
- DE-A- 1 940 655
- Dr. Otto-Albrecht Neum~ller,"Römpps Chemie-Lexikon, Achte, neubearbeitete und erweiterte Auflage", 1987, Franckhésche Verlagshandlung, W. Keller & Co., (Stuttgart) Seite 3438 - Seite 3439, "Quartäre Ammonium-verbindungen"

## Beschreibung

Die vorliegende Erfindung betrifft flüssige Wäschestärke-Konzentrate, insbesondere zur Anwendung in der gewerblichen Wäscherei, die eine wäßrige Suspension von Stärke und ein bestimmtes Konservierungsmittel-System enthalten, und die Verwendung eines derartigen Konservierungsmittelsystems zur Konservierung von flüssigen Wäschestärke-Konzentraten.

Zum sogenannten Stärken oder Appretieren von Wäsche werden in der Regel stärkehaltige Mittel eingesetzt, die entweder als eine Aufkochung von zunächst unverkleisterter Stärke oder als Auflösung von vorverkleisterter Stärke wie Quellstärke oder als Suspension von unverkleisterter Stärke angewendet werden, die erst auf der Wäsche bei Einwirkung höherer Temperatur, zum Beispiel beim Bügeln oder Mangeln, verkleistert und beispielsweise bei Tischwäsche für die erwünschte Steifheit des Textils sorgt. Derartige Mittel können in bekannter Weise auch weitere in sogenannten Wäschenachbehandlungsmitteln übliche Inhaltsstoffe enthalten, die etwa den sogenannten Griff oder die Bügelfähigkeit der Wäsche verbessern. Zur Vereinfachung der Dosierung und Handhabung ist es vorteilhaft, Wäschestärke in flüssiger Form einzusetzen. Dies trifft in besonderer Weise für den Einsatz in gewerblichen Wäschereien zu, wo man üblicherweise vorgelöste Wirkstoffe, sogenannte Stammlaugen, in die Waschtrommel beziehungsweise den jeweiligen Abschnitt einer aus mehreren Kammern bestehenden Waschstraße automatisch mit Hilfe von Pumpen eindosiert. Daraus resultiert bereits eine Anforderung an das erfindungsgemäße Mittel, nämlich die sogenannte Stammlaugenfähigkeit, das heißt die Lagerstabilität bei Verdünnung mit Wasser. Dies bezieht sich sowohl auf die physische Stabilität, daß heißt die Vermeidung von Phasentrennungen wie das Absetzten der Stärke, als auch auf die mikrobiologische Stabilität der Suspensionen. Mittel die Stärke, ein leicht biologisch abbaubares Material, enthalten, sind anfällig gegen den Befall von Mikroorganismen, die sogenannte Verkeimung. Dieses Problem wird durch die Forderung aus der gewerblichen Wäscherei, Stammlaugen einzusetzen, die normalerweise über mehrere Tage in Vorratsbehältern gelagert und aus diesen dosiert werden, noch verstärkt. Auch falls durch den Befall der Mikroorganismen die Wirksamkeit der Stärkesuspensionen nicht abnehmen sollte, kann er insbesondere bei den Menschen befallenden Keimen nicht hingenommen werden, da ja die Wäschstärke auf dem behandelten Textil verbleibt und in Kontakt mit Menschen kommt.

Um das Absetzen der Stärke aus der Suspension zu vermeiden ist es bekannt, eine sogenannte Trägerflotte zu verwenden, die beispielsweise eine wäßrige Lösung von Carboxymethylcellulose sein kann. Um eine vom Anwender gewünschte, möglichst hohe Menge von Stärke suspendiert zu halten, muß aber die Konzentration von Carboxymethylcellulose derart hoch sein, daß wegen der verdickenden Wirkung der Carboxymethylcellulose die Handhabung des Wäschestärke-Konzentrats erschwert ist. Wenn man eine durch kurzzeitiges Erwärmen auf beispielsweise 40 °C bis 60°C vorgequollene Stärkesuspension einsetzt, ergeben sich bei Verwendung von Carboxymethylcellulose Schwierigkeiten dadurch, daß die Zubereitung im Laufe kurzer Zeit erheblich nachdickt.

Aus der deutschen Patentschrift DT 1 940 655 sind Stärkesuspensionen bekannt, die als wäßrige Phase eine Lösung von Xanthan-Gum und/oder wasserlöslichen Derivaten des Xanthan-Gums enthalten. Dadurch wird ein Absetzen der Stärke wirksam verhindert.

Zur Erhöhung der Stabilität gegen den Befall von Mikroorganismen wird dort vorgeschlagen, übliche Desinfektionsmittel-Wirkstoffe wie Formaldehyd einzusetzen. Da auch derartige Desinfektionsmittel auf der gestärkten Wäsche verbleiben, besteht bei Einsatz solcher Wirkstoffe ebenfalls die Gefahr der Belastung des Anwenders. Daher scheidet trotz deren guter antimikrobieller Wirksamkeit beispielsweise die Verwendung von Formaldehyd und anderen Aldehyden, Phenolen und Substanzen, die Aktivchlor abspalten, aus.

Ferner wird in der entsprechenden deutschen Offenlegungsschrift DE-A-19 40 655 ausgeführt, daß derartige Formulierungen Zusätze von niederen Alkoholen, beispielsweise Ethanol, und als Desinfektionsmittel auch quartäre Ammoniumsalze wie Tetraalkylammoniumhalogenide, zum Beispiel Dimethyl-dodecyl-benzyl-ammoniumchlorid, enthalten können.

In der WO-A-86/05509 werden flüssige Desinfektions- und Reinigungsmittel beschrieben, die Wasser, ein germizides quartäres Ammoniumhalogenid und ein Glycosid-Tensid enthalten. Als germizide quartäre Ammoniumverbindung kommen beispielsweise Dialkyl-dimethyl-ammoniumhalogenide wie Didecyl-dimethyl-ammoniumhalogenid oder Dioctyl-dimethyl-ammoniumhalogenid in Frage.

Die Aufgabe der vorliegenden Erfindung war es, ein Konservierungsmittel für Wäschestärke-Konzentrate zu finden, das einerseits die Verkeimung des Wäschestärke-Konzentrats wie auch der aus diesem hergestellten wäßrigen Stammlauge zuverlässig verhindert und andererseits nicht in für den Anwender nachteiligen Mengen beziehungsweise Aktivitäten auf der gestärkten Wäsche verbleibt.

Diese Aufgbe wurde im wesentlichen gelöst durch die Verwendung einer Kombination aus Ethanol und quaternärer Ammoniumverbindung der allgemeinen Formel I,

R¹R²(CH₃)₂N⁺A⁻ (I)

zur Konservierung wäßriger Wäschestärke-Konzentrate, die Stärke beziehungsweise Stärkederivate in einer wäßrigen Xanthan-Lösung suspendiert enthalten, dadurch gekennzeichnet, daß in der allgemeinen Formel I die beiden Reste R¹ und R² n-Decylreste und A⁻ ein ladungsausgleichendes Anion wie Halogenid (z.B. Chlorid, Bromid, lodid, Fluorid), Metho- oder Ethosulfat bedeuten.

In der erfindungsgemäß zu verwendenden Kombination beträgt das Gewichstverhältnis der Komponenten Ethanol zu quaternärer Ammoniumverbindung vorzugsweise 5000:1 bis 1:1, insbesondere 400:1 bis 10:1. Die erfindungsgemäß zu verwendende Kombination liegt vorzugsweise in flüssiger Form vor und kann weitere Inhaltsstoffe, die zum Beispiel aus der Anlieferungsform der Komponenten herrühren, enthalten. So enthält Ethanol oft neben Wasser sogenannte Vergällungsmittel wie Methylethylketon, und quaternäre Ammoniumverbindungen sind in Form von Zubereitungen handelsüblich, die neben Wasser andere niedere Alkohole als Ethanol, zum Beispiel Isopropanol, enthalten.

Die erfindungsgemäß zu verwendende Kombination wird vorzugsweise in Mengen von 1 Gew.-Teilen bis 10 Gew.-Teilen, insbesondere von 2 Gew.-Teilen bis 8 Gew.-Teilen, jeweils bezogen auf 100 Gew.-Teile des gesamten flüssigen Wäschestärke-Konzentrats, zu dessen Konservierung verwendet.

Ein weiterer Gegenstand der Erfindung ist ein flüssiges Wäschestärke-Konzentrat, das Stärke beziehungsweise Stärkederivate in einer wäßrigen Xanthan-Lösung suspendiert enthält und zusätzlich Ethanol und eine quaternäre Ammoniumverbindung der allgemeinen Formel I,

R¹R²(CH₃)₂N⁺ A⁻ (I)

dadurch gekennzeichnet, daß in der allgemeinen Formel I die beiden Reste R¹ und R² n-Decylreste und A⁻ ein ladungsausgleichendes Anion wie Halogenid (z.B. Chlorid, Bromid, Iodid, Fluorid), Metho- oder Ethosulfat, bedeuten. Ethanol ist vorzugsweise in Mengen von 1 Gew.-% bis 10 Gew.-%, insbesondere von 2 Gew.-% bis 8 Gew.-%, in erfindungsgemäßen Mitteln enthalten, während die quaternäre Ammoniumverbindung gemäß allgemeiner Formel I in Mengen von vorzugsweise 0,002 Gew.-% bis 0,5 Gew.-%, insbesondere 0,02 Gew.-% bis 0,2 Gew.-% enthalten ist. Ethanol und quaternäre Ammoniumverbindung der allgemeinen Formel I können in Form der erfindungsgemäß zu verwendenden Kombination oder separat in die erfindungsgemäßen Mittel eingearbeitet werden.

Als Stärke können alle in Kom- beziehungsweise Pulverform vorliegenden Stärken und Stärkederivate eingesetzt werden wie beispielsweise Maisstärke, Reisstärke, Kartoffelstärke und/oder Tapiokastärke. Sie liegt vorzugsweise in nativem Zustand vor, kann jedoch gegebenenfalls auch thermisch, hydrolytisch oder oxidativ abgebaut sein. Unter Stärken sollen im Rahmen der vorliegenden Erfindung auch alle Stärkedrivate verstanden werden, die in kaltem Wasser weitgehend unlöslich sind und in heißem Wasser verkleistern. Stärke ist in erfindungsgemäßen Mitteln vorzugsweise in Mengen von 10 Gew.-% bis 50 Gew.-%, insbesondere 20 Gew.-% bis 45 Gew.-% enthalten.

Zur Stabilisierung der wäßrigen Mittel gegen das Absetzen der Stärke enthalten sie wasserlösliches Xanthan, wie es beispielsweise unter den Produktbezeichnungen Kelzan®, Rhodopol®, Ketrol® oder Rheozan® handelsüblich ist. Unter Xanthan versteht man ein Polysaccharid, welches demjenigen entspricht, das von dem Bakterienstamm Xanthomas campestris aus wäßrigen Lösungen von Glukose oder Stärke erzeugt wird (J. Biochem. Micobiol. Technol. Engineer. Vol. III (1961), S. 51 bis 63). Es besteht im wesentlichen aus Glukose, Mannose, Glucuronsäure und deren Acetylierungsprodukten und enthält ferner untergeordnete Mengen chemisch gebundener Brenztraubensäure. Auch der Einsatz wasserlöslicher Xanthanderivate, wie sie zum Beispiel durch Oxalkylierung mit beispielsweise Ethylenoxid, Propylenoxid und/oder Butylenoxid, durch Alkylierung mit beispielsweise Methylhalogeniden und/oder Dimethylsulfat, durch Acylierung mit Carbonsäurehalogeniden oder durch verseifende Desacetylierung erhalten werden können, ist möglich. Xanthan ist in erfindungsgemäßen Mitteln vorzugsweise in Mengen von 0,1 Gew.-% bis 2 Gew.-%, insbesondere 0,2 Gew.-% bis 1,5 Gew.-% enthalten. Es trägt ganz entscheidend zur Viskosität der erfindungsgemäßen Wäschestärke-Konzentrate, die bei Raumtemperatur vorzugsweise im Bereich von 500 mPa^{·}s bis 10 000 mPa^{·}s, insbesondere von 1 000 inPa^{·}s bis 6 000 mPa^{·}s liegt, bei. Von besonderem Vorteil ist, daß bei Einsatz von Xanthan sich die Viskosität über einen breiten Temperaturbereich von -5 °C bis 40 °C nur unwesentlich ändert und auch bei Verlassen dieses Temperaturbereiches sich reversibel wieder Werte im genannten bevorzugten Viskositätsbereich einstellen, wenn man das Mittel wieder auf Raumtemperatur bringt.

Zusätzlich können die erfindungsgemäßen flüssigen Wäschestärke-Konzentrate alle in derartigen Mitteln üblichen Inhaltsstoffe enthalten, zu denen beispielsweise Gleit- und Glättemittel, anionische und/oder nichtionische tensidische Wirkstoffe, wassermischbare Lösungsmittel beziehungsweise Emulgatoren wie Ethylenglykol und/oder Glycerin, Glanzmittel wie Borax und Farb- sowie Duftstoffe gehören. Wasser ist in den erfindungsgemäßen Mitteln vorzugsweise in Mengen von 40 Gew.-% bis 80 Gew.-%, insbesondere von 45 Gew.-% bis 80 Gew.-% enthalten.

Zur Anwendung der flüssigen Wäschestärke kann ein erfindungsgemäßes Konzentrat mit Wasser soweit verdünnt werden, daß eine gebrauchsfertige Lösung entsteht, die 0,5 g/l bis 10 g/l Stärke enthält. Diese kann im Haushalt von Hand oder als Spüllösung im Spülgang einer üblichen Waschmaschine angewendet werden. Bei Einsatz in der gewerblichen Wäscherei wird ein erfindungsgemäßes Mittel dem letzten Spülbad vorzugsweise in Mengen von 2 bis 30 g pro Kilogramm Trockenwäsche zugesetzt.

### Beispiele

Ein Wäschestärke-Konzentrat **M1** der in nachfolgender Tabelle 1 angegebenen Zusammensetzung wurde durch einfaches Vermischen ihrer Bestandteile hergestellt, wobei man Wasser vorlegte, auf ca. 80 °C erwärmte, das PEG-Triglycerid, Borax und Glycerin einrührte, auf unter 30 °C abkühlte, mit Wasser verdünntes Ethanol zusetzte, die Maisstärke einrührte und eine wäßrige Mischung aus Xanthan und QAV zumischte sowie anschließend mit dem Parfum vermischte. Das Mittel besaß einen pH-Wert von 7,9 und war bei Temperaturen von -10 °C bis zu 50°C über jeweils mindestens 24 Wochen ohne signifikantes Absetzen der Stärke lagerstabil, wobei seine Viskosität (gemessen jeweils bei Raumtemperatur) sich nicht wesentlich änderte.

**Tabelle 1:**

| Zusammensetzung (Gew.-%) von Wäschestärke-Konzentraten | |
|---|---|
| Mittel | **M1** |
| Maisstärke | 30 |
| Xanthan | 0,4 |
| Ethanol | 4,8 |
| QAV^{a)} | 0,05 |
| PEG-Triglycerid | 2,25 |
| Glycerin | 5 |
| Borax | 2,5 |
| Parfum | 0,45 |
| Wasser | auf 100 |
| Viskosität^{b)} | 3000 |

| | |
|---|---|
| a) Didecyldimethylammoniumchlorid | |
| b) in mPa^{·}s, gemessen bei Raumtemperatur unter Verwendung eines Brookfield-Rotationsviskosimeters RVT (Spindel Nr. 3, 20 Umdrehungen pro Minute) | |

## Patentansprüche

1. Flüssiges Wäschestärke-Konzentrat, das Stärke beziehungsweise Stärkederivate in einer wäßrigen Xanthan-Lösung suspendiert enthält sowie zusätzlich Ethanol und eine quaternäre Ammoniumverbindung der allgemeinen Formel I,
R¹R²(CH₃)₂N⁺A⁻ (I)
**dadurch gekennzeichnet, daß** in der allgemeinen Formel (I) die beiden Reste R¹ und R² n-Decylreste und A⁻ ein ladungsausgleichendes Anion bedeuten.

2. Mittel nach Anspruch 1, **dadurch gekennzeichnet, daß** die Stärke Maisstärke, Reisstärke, Kartoffelstärke und/oder Tapiokastärke ist und in nativem Zustand vorliegt oder thermisch, hydrolytisch oder oxidativ abgebaut ist.

3. Mittel nach Anspruch 1 oder 2, **dadurch gekennzeichnet, daß** es Stärke in Mengen von 10 Gew.-% bis 50 Gew.-% enthält.

4. Mittel nach einem der Ansprüche 1 bis 3, **dadurch gekennzeichnet, daß** es Xanthan in Mengen von 0,1 Gew.-% bis 2 Gew.-% enthält.

5. Mittel nach einem der Ansprüche 1 bis 4, **dadurch gekennzeichnet, daß** es Ethanol in Mengen von 1 Gew.-% bis 10 Gew.-% und quaternäre Ammoniumverbindung der allgemeinen Formel I in Mengen von 0,002 Gew.-% bis 0,5 Gew.-% enthält.

6. Mittel nach einem der Ansprüche 1 bis 5, **dadurch gekennzeichnet, daß** es 40 Gew.-% bis 80 Gew.-% Wasser enthält.

7. Mittel nach einem der Ansprüche 1 bis 6, **dadurch gekennzeichnet, daß** es bei Raumtemperatur eine Viskosität im Bereich von 500 mPa^{·}s bis 10 000 mPa^{·}s aufweist.

8. Verwendung einer Kombination aus Ethanol und quaternärer Ammoniumverbindung der allgemeinen Formel I,
R¹R²(CH₃)₂N⁺ A⁻ (I)
zur Konservierung wäßriger Wäschestärke-Konzentrate, die Stärke beziehungsweise Stärkederivate in einer wäßrigen Xanthan-Lösung suspendiert enthalten, **dadurch gekennzeichnet, daß** in der allgemeinen Formel (I) die beiden Reste R¹ und R² n-Decylreste und A⁻ ein ladungsausgleichendes Anion bedeuten.

9. Verwendung nach Anspruch 8, **dadurch gekennzeichnet, daß** das Gewichtsverhältnis von Ethanol zu quaternärer Ammoniumverbindung 5000:1 bis 1:1 beträgt.

## Claims

1. A liquid laundry starch concentrate which contains starch or starch derivatives suspended in an aqueous xanthan solution and, in addition, ethanol and a quaternary ammonium compound corresponding to general formula (I):
R¹R²(CH₃)₂N⁺ A- (I)
**characterized in that**, in general formula (I), the two substituents R¹ and R² are n-decyl groups and A- is a charge-compensating anion.

2. A concentrate as claimed in claim 1, **characterized in that** the starch is corn starch, rice starch, potato starch and/or tapioca starch and is present in native form or in thermally, hydrolytically or oxidatively degraded form.

3. A concentrate as claimed in claim 1 or 2, **characterized in that** it contains starch in quantities of 10% by weight to 50% by weight.

4. A concentrate as claimed in any of claims 1 to 3, **characterized in that** it contains xanthan in quantities of 0.1% by weight to 2% by weight.

5. A concentrate as claimed in any of claims 1 to 4, **characterized in that** it contains ethanol in quantities of 1% by weight to 10% by weight and the quaternary ammonium compound corresponding to general formula I in quantities of 0.002% by weight to 0.5% by weight.

6. A concentrate as claimed in any of claims 1 to 5, **characterized in that** it contains 40% by weight to 80% by weight of water.

7. A concentrate as claimed in any of claims 1 to 6, **characterized in that** it has a viscosity at room temperature of 500 mPaAs to 10,000 mPaAs.

8. The use of a combination of ethanol and a quaternary ammonium compound corresponding to general formula (I):
R¹R²(CH₃)₂N⁺ A- (I)
for preserving aqueous laundry starch concentrates which contain starch or starch derivatives suspended in an aqueous xanthan solution, **characterized in that**, in general formula (I), the two substituents R¹ and R² are n-decyl groups and A- is a charge-compensating anion.

9. The use claimed in claim 8, **characterized in that** the ratio by weight of ethanol to quaternary ammonium compound is 5,000:1 to 1:1.

## Revendications

1. Concentré d'amidon de lessive liquide qui renferme l'amidon ou le dérivé d'amidon dans une solution aqueuse de xanthane, ainsi qu'en supplément de l'éthanol et un composé d'ammonium quaternaire de formule générale I :
R¹R²(CH₃)₂N⁺ A⁻ (I)
**caractérisé en ce que**
dans la formule générale I les deux restes R¹ et R² signifient des restes n-décyle et A un anion qui équilibre la charge.

2. Composition selon la revendication 1,
**caractérisée en ce que**
l'amidon est de l'amidon de maïs, de l'amidon de riz, de la fécule de pomme de terre et/ou de la fécule de tapioca et se présente à l'état naturel, ou bien est dégradé thermiquement, par hydrolyse ou par oxydation.

3. Composition selon la revendication 1 ou la revendication 2,
**caractérisée en ce qu'**
elle contient de l'amidon en quantités allant de 10 % en poids à 50 % en poids.

4. Composition selon l'une des revendications 1 à 3,
**caractérisée en ce qu'**
elle contient le xanthane en quantités allant de 0,1 % en poids à 2 % en poids.

5. Composition selon l'une des revendications 1 à 4,
**caractérisée en ce qu'**
elle contient de l'éthanol en quantités allant de 1 % en poids à 10 % en poids et un composé d'ammonium quaternaire de formule générale I en quantités allant de 0,002 % en poids à 0,5 % en poids.

6. Composition selon l'une des revendications 1 à 5,
**caractérisée en ce qu'**
elle contient de 40 % en poids à 80 % en poids d'eau.

7. Composition selon l'une des revendications 1 à 6,
**caractérisée en ce qu'**
elle possède à température ambiante une viscosité dans la zone de 500 mPas à 10 000 mPas.

8. Utilisation d'une combinaison à base d'éthanol et de composé d'ammonium quaternaire de formule générale I :
R¹R²(CH₃)₂N⁺ A⁻ (I)
pour la conservation de concentrés d'amidon de lessive aqueux qui contiennent en suspension dans une solution aqueuse de xanthane, l'amidon ou les dérivés d'amidon,
**caractérisée en ce que**
dans la formule générale 1 les deux restes R¹ et R² signifient des restes n-décyle et A- signifie un anion qui équilibre la charge.

9. Utilisation selon la revendication 8,
**caractérisée en ce que**
le rapport pondéral de l'éthanol au composé d'ammonium quaternaire s'élève à de 5 000 : 1 à 1 : 1.
